# EUROPÄISCHE PATENTSCHRIFT

(11) **EP 1 841 631 B1**
(45) Veröffentlichungstag und Bekanntmachung des Hinweises auf die Patenterteilung: **13.07.2011**
(21) Anmeldenummer: 05850236.0
(22) Anmeldetag: 07.12.2005
(51) Int. Cl.: B60S 1/04, B60S 1/58

(54) **BEFESTIGUNGSANORDNUNG FÜR EINEN HECKSCHEIBENWISCHER AN EINEM FAHRZEUG**
FASTENING SYSTEM FOR FASTENING A REAR WINDOW WIPER TO A VEHICLE
SYSTEME DE FIXATION POUR ESSUIE-GLACE DE LUNETTE ARRIERE DE VEHICULE

(30) Priorität: 18.01.2005 DE 102005002256
(43) Veröffentlichungstag der Anmeldung: 10.10.2007
(73) Patentinhaber: Volkswagen Aktiengesellschaft, 38436 Wolfsburg (DE)
(72) Erfinder: OSTROWSKI, Wolfgang, 38446 Wolfsburg (DE)
(86) Internationale Anmeldenummer: PCT/EP2005/013109
(87) Internationale Veröffentlichungsnummer: WO 2006/076947

(56) Entgegenhaltungen:
- WO-A-01/08945
- WO-A-2004/089707
- US-A1- 2004 130 177

## Beschreibung

Die Erfindung betrifft eine Befestigungsanordnung für einen Heckscheibenwischer an einem Fahrzeug, bei der die elektrische Antriebsvorrichtung im Innern der Fahrzeugkarosserie angeordnet und die den Heckscheibenwischer tragende Wischerwelle nach außen geführt ist.

Heckscheibenwischervorrichtungen der vorstehend beschriebenen Art weisen in der Regel einen Wischermotor und ein mit dessen Abtriebswelle gekoppeltes Schneckengetriebe auf, an dessen Schneckenrad exzentrisch ein Zapfen gelagert ist, der an einer Koppelstange angreift, die die Rotationsbewegung des Schneckenrades über ein Zahnkranzsegment und ein mit der Wischerwelle drehfest verbundenes Zahnrad oder -segment in eine Pendelbewegung der Wischerwelle und des an dieser angeordneten Wischerarmes umsetzt. Der Wischermotor kann aber auch ein Reversiermotor sein, der mit einem Planetengetriebe verbunden ist, dessen Abtriebswelle zugleich die Wischerwelle ist. Die Antriebseinheiten (Antriebsvorrichtungen) sind jeweils im Innern des Fahrzeugs angeordnet, und die Wischerwelle und ein Lager für diese sind durch ein Durchgangsloch nach außen geführt. Dabei kann die Anordnung so vorgenommen sein, dass die jeweilige Antriebsvorrichtung am Karosserieaufbau festgelegt und die Wischerwelle durch den unteren Rand der Heckscheibe in deren Mitte geführt sind. Der damit verbundene Vorteil ist ein großes Wischfeld mit einer Pendelbewegung des Wischerarmes in einem Winkelbereich von 180°, wodurch auch die Eckbereiche der Heckscheibe mit erfasst werden können. Die Anordnung setzt die Einbringung eines entsprechenden Loches in die Heckscheibe voraus.

In der DE 26 32186 A1 ist dazu eine Befestigungsanordnung beschrieben, bei der die Wischer welle drehbar in einem hülsenartigen Abstandshalter mit Hilfe einer Buchse (Wischerwellenlager) gelagert ist, die sich mit Spiel durch eine Öffnung in der Heckscheibe hindurcherstreckt. Dieses Spiel ist durch zwei ringförmige Dichtungsglieder aus einem Elastomerwerkstoff mittels eines Glasprotektors abgedichtet, der zwischen dem äußeren Umfang der Buchse und den inneren Umfängen der beiden kreisförmigen Dichtungsglieder angeordnet ist. Letztere unterbinden zugleich die Übertragung von mechanischen Schwingungen von der Wischerwelle auf die Heckscheibe (akustische Entkopplung). Die Festlegung der Scheibenwischvorrichtung erfolgt dabei zusätzlich an einer Karosseriezwischenwand mit Hilfe eines Bügels, an dem der Wischermotor befestigt ist.

Bei einer in der DE 694 06 244 T2 beschriebenen Befestigungsanordnung ist zwischen einem die Wischerwelle aufnehmenden Lager und einem Durchgangsloch (Öffnung) in der Heckscheibe des Fahrzeugs oder in einem Teil der Fahrzeugkarosserie eine abgesetzte Montagehülse eingefügt, um die Befestigung der Antriebsvorrichtung mit einer Klemmmutter auf einem sich an der Außenseite des Fahrzeugs erstreckenden Gewindeteilstück des Lagers zu ermöglichen. Zwischen der Montagehülse und dem Rand des Durchgangsloches ist eine Dichtung angeordnet, auf der die Klemmmutter mit einer Unterlegscheibe aufliegt. Die Antriebseinheit ist an einer Montageplatte befestigt, die fahrzeugfest angeordnet ist.

Bei der Anordnung einer Öffnung im unteren Randbereich der Heckscheibe ist jedoch ein Mindestabstand vom unteren Rand zu beachten, damit die Heckscheibe die durch die Anordnung der Scheibenwischeranlage auftretenden Kräfte dauerhaft und zuverlässig aufnehmen kann. Die damit verbundene Anordnung des Scheibenwischers kann zu einer Sichtbehinderung für den Fahrer führen.

Eine gattungsgemäße Befestigungsanordnung ist aus der WO-A-01/08945 bekannt.

Es ist Aufgabe der Erfindung, die Befestigungsanordnung für einen Heckscheibenwischer an einem Fahrzeug nach dem Oberbegriff des Anspruchs 1 so zu gestalten, dass eine Sichtbehinderung durch den Scheibenwischer für den Fahrer weitgehend vermieden wird.

Diese Aufgabe wird bei einer Befestigungsanordnung nach dem Oberbegriff des Anspruchs 1 durch dessen kennzeichnende Merkmalen gelöst. Vorteilhafte Ausgestaltungen sind in den Unteransprüchenaufgeführt.

Erfindungsgemäß wird diese Aufgabe durch die Merkmale des Anspruchs 1 gelößt.

Dadurch gelingt es, dass die Wischerwelle in der Höhe des Karosserieblechrandes zur Anordnung gelangt, und die Umkehrstellungen des Scheibenwischers an diesem Rand liegen, so dass sowohl eine Pendelbewegung des Wischerarmes in einem Winkelbereich von 180° ermöglicht ist als auch eine Sichtbehinderung durch den Scheibenwischer für den Fahrer weitgehend vermieden wird.

Der Einsatz wird vorteilhaft durch eine Klebeverbindung mit dem Karosserieblech verbunden und ist außenseitig derart gestaltet, dass dieser bündig mit der Heckscheibe abschließt. Der fahrzeuginnenseitig zu einem Halterungsbock ausgebildete Einsatz nimmt den Lagerkörper mit der Wischerwelle und der mit dieser verbundenen Antriebsvorrichtung über eine Rastverbindung auf, so dass die gesamte Scheibenwischeranlage auf einfache Weise an dem Einsatz lösbar befestigt ist. Eine Verschraubung derselben mit der Fahrzeugkarosserie erübrigt sich damit, wodurch der Montageprozess verkürzt wird.

Dazu kann der fahrzeuginnenseitige Endbereich des Halterungsbockes zu einer aus mehreren achsparallelen Rastsegmenten bestehenden Rasthülse für den Lagerkörper ausgebildet sein, die im Verrastungszustand eine an diesem ausgebildete Ringwulst hintergreift. Dabei können die Rastsegmente lagerkörperseitig an die Ringwulst angepasst sein und diese im Verrastungszustand formschlüssig umschließen, was zur Stabilität und Zuverlässigkeit der Befestigung beiträgt, insbesondere in Verbindung mit einer Klemmschelle, die auf der Rasthülse anordbar ist und die die Rastsegmente an den Lagerkörper anpresst.

Die Rastverbindung zwischen dem Lagerkörper und dem Halterungsbock bzw. Einsatz kann auch derart gestaltet sein, dass der Lagerkörper auf seiner Umfangsfläche ein in axialer Richtung ausgebildetes Rastelement mit einem auf der der Antriebsvorrichtung abgewandten Seite angeformten pilzkopfförmigen Rastkopf aufweist, der in eine am Halterungsbock ausgebildete Führungsnut eingreift, in der in Richtung der Fahrzeugaußenseite auf das Rastelement zu geneigte elastische Raststege ausgebildet sind, die den Rastkopf in der Verrastungsposition hintergreifen. Zum Zwecke des Lösens der Rastverbindung sind die Raststege aus dem Hintergriff zu biegen und dabei in ausgebildete Taschen zu drücken.

Zwischen dem Lagerkörper und dem Halterungsbock ist ein gummielastisches Element angeordnet, dass den Lagerkörper gegenüber dem Halterungsbock und damit die Scheibenwischvorrichtung gegenüber dem Einsatz in axial-radialer Richtung abdichtet. Zugleich übernimmt das gummielastische Element die akustische Entkopplung der Antriebsvorrichtung vom Einsatz und damit von der Fahrzeugkarosserie und von der Fahrzugscheibe. Weitere Befestigungs- und Entkopplungselemente entfallen.

Das gummielastische Element kann als in axialer Richtung erstreckte Dichtungshülse ausgebildet sein, die in einem zwischen dem Lagerkörper und dem Halterungsbock für diesen vorgesehenen Zwischenraum durch Einspritzen des gummielastischen Materials erzeugt ist. Zur Verbesserung der Dichtungswirkung kann der Lagerkörper im Anordnungsbereich der Dichtungshülse bzw. im Bereich des Zwischenraumes mit konzentrischen Rillen versehen sein.

Die Erfindung wird nachstehend anhand eines Ausführungsbeispiels erläutert. Die zugehörigen Zeichnungen zeigen:
- Fig. 1:: die Heckklappe eines Fahrzeugs mit einer an einem Einsatz angeordneten Scheibenwi- scheranlage,
- Fig. 2:: den Einsatz, perspektivisch und vergrößert,
- Fig. 3:: eine Antriebsvorrichtung mit einem Lagerkörper und einer in dieser gelagerten Wischer- welle,
- Fig. 4:: eine Befestigungsanordnung des Lagerkörpers am Einsatz vermittels einer Rastverbin- dung in einem Axialschnitt, gegenüber Fig. 3 vergrößert, und
- Fig. 5a und b:: eine andere Ausführung einer Rastverbindung zwischen dem Lagerkörper und dem Einsatz.

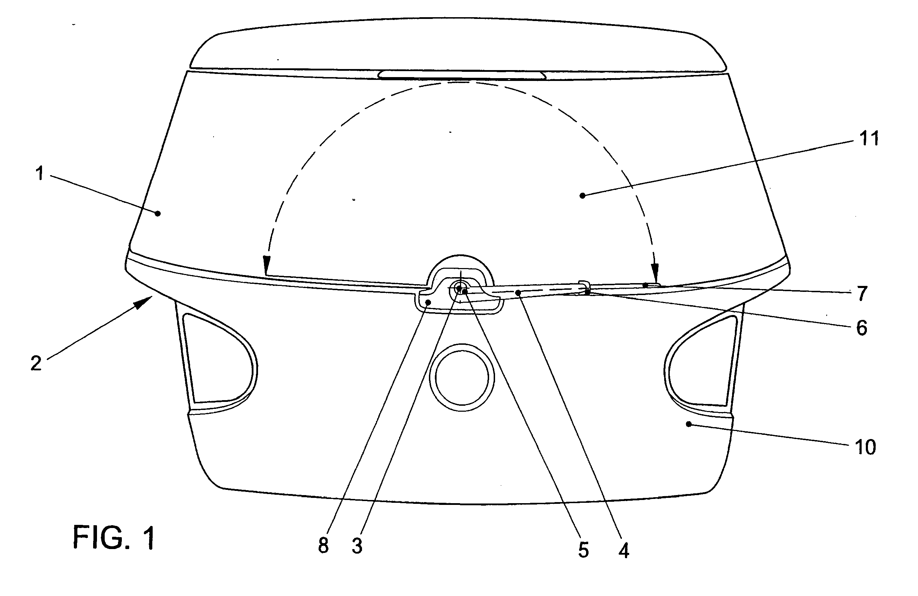

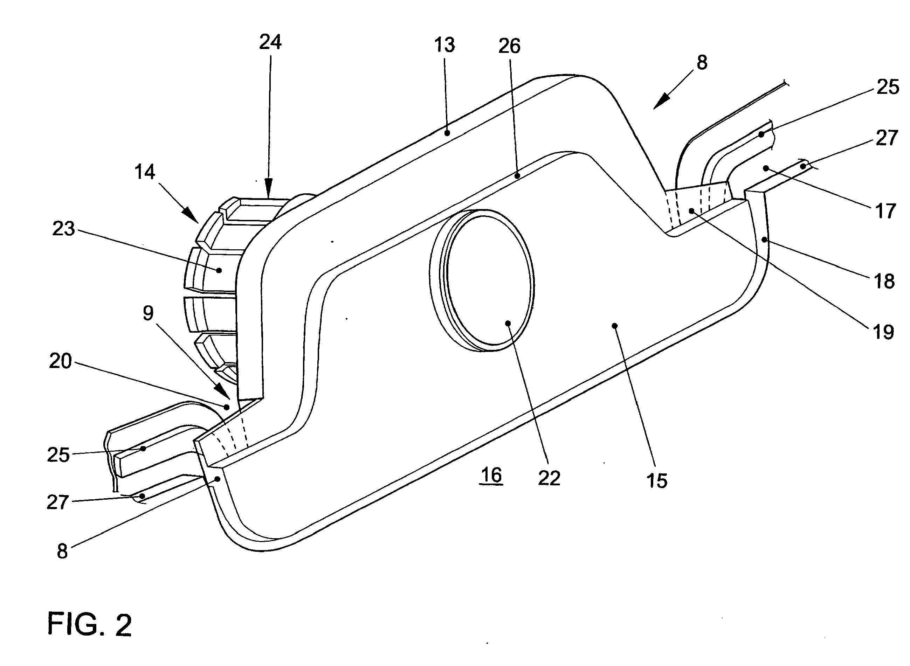

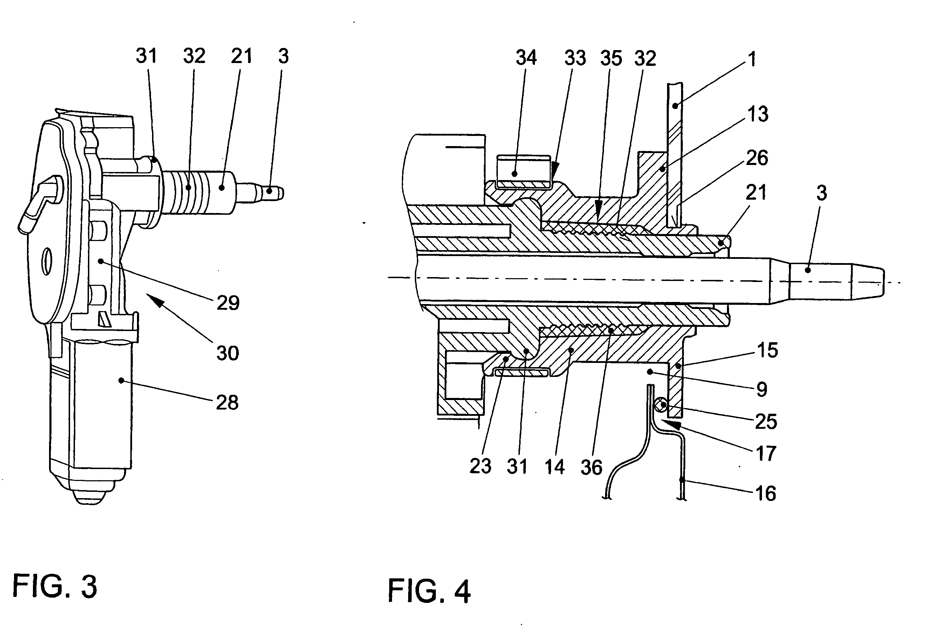

Fig. 1 zeigt eine an der Heckscheibe 1 einer Heckklappe 2 eines Fahrzeugs angeordnete Scheibenwischeranlage mit einer pendelnd angetriebenen Wischerwelle 3, einem an dieser drehfest angeordneten Wischerarm 4 und einer an derem freien Ende fahrzeugfest angeordneten Spritzdüse 5, auf die im Weiteren jedoch nicht näher eingegangen wird, und einer Anschlussvorrichtung 6 für ein Wischerblatt 7. Die Wischerwelle 3 und die fahrzeuginnenseitig angeordnete elektrische Antriebsvorrichtung (30, Fig. 3) für diese sind an einem Einsatz 8 aus Kunststoff gehaltert, der in einer Ausnehmung (9, Fig. 2) in dem an die Heckscheibe 1 grenzenden Karosserieblech 10 ausgebildet ist. Dieser Einsatz 8 ermöglicht die Anordnung der Wischerwelle 3 im Grenzbereich zwischen Karosserieblech 10 und Heckscheibe 1, so dass der aus Wischerarm 4 und Wischerblatt 7 gebildete Scheibenwischer ein Wischfeld 11 von im wesentlichen 180° überstreicht, was durch gestrichelte Linien angedeutet ist.

Die in Fig. 2 näher gezeigte Ausführung und Anordnung des Einsatzes 8 weist eine fahrzeuginnenseitig ausgebildete und in die Ausnehmung 9 eingesetzte Halterungsplatte 13 mit einem Halterungsbock 14 und eine fahrzeugaußenseitig ausgebildete und einstückig mit dieser verbundene Deckplatte 15 auf, die den die Ausnehmung 9 umgebenden Karosserieblechrand außenseitig überlappt und dabei in einer durch das Karosserieaußenblech 16 gebildeten Einsenkung 17 angeordnet ist, mit dessen Außenfläche bündig ist und eine gleichmäßige Fuge 18 mit diesem ausbildet. In den seitlichen Übergangsbereichen zwischen den Platten 13 und 15 ist jeweils ein dünner Wandungsansatz 19 angeformt, der den in der Ausnehmung 9 zwischen dem Karosserieblechrand und der Halterungslatte 13 gegebenen Spalt 20 überdeckt. Am Einsatz 8 ist eine Öffnung 22 ausgebildet, die der Anordnung und Durchführung der in einem Lagerkörper (21, Fig. 3, 4) geführten Wischerwelle 3 dient, die mit der am Halterungsbock 14 gehalterten Antriebsvorrichtung (30, Fig. 3) verbunden ist. Der Halterungsbock 14 weist an seinem fahrzeuginnenseitigen Endbereich eine aus Rastsegmenten 23 gebildete Rasthülse 24 zur Verbindung mit dem Lagerkörper (21) auf. Dieser Einsatz 8 ist mittels einer Klebstoffraupe 25 mit dem die Ausnehmung 9 umgebenden Karosserieblechrand stoffschlüssig verbunden. Die Heckscheibe 1 ist an die Form der Deckplatte 15 angepasst und liegt formschlüssig an derem oberen Rand 26 und auf dem sich beidseitig anschließenden Rand 27 des Karosserieaußenblechs 16 im Bereich der Einsenkung 17 an und ist vermittels einer nicht dargestellten Klebstoffschicht an der Halterungsplatte 13 und vermittels der Klebstoffraupe 25 mit dem Karosserieblechrand fest verbunden.

Fig. 3 zeigt eine aus einem Wischermotor 28 und einem Getriebe 29 gebildete Antriebsvorrichtung 30 mit der pendelnd angetriebenen und in dem Lagerkörper 21 geführten Wischerwelle 3 zur drehfesten Anordnung des Wischerarmes 4, wobei der mit der Antriebsvorrichtung verbundene Lagerkörper 21 antriebsvorrichtungsseitig eine Ringwulst 31, die mit der Rasthülse 24 des Halterungsbockes 14 in Eingriff bringbar ist, und an seinem Umfang konzentrisch angeordnete Rillen 32 aufweist.

In dem in Fig. 4 dargestellten, im Wesentlichen vertikalen Axialschnitt ist die Befestigungsanordnung im Verrastungszustand verdeutlicht. Der Halterungsbock 14 umschließt den Lagerkörper 21, wobei die Rastsegmente 23 die Ringwulst 31 hintergreifen, so dass der die Antriebsvorrichtung 30 tragende Lagerkörper 21 fest, jedoch lösbar mit dem Halterungsbock 14 verspannt ist. Die Rastsegmente 23 sind umfangsseitig mit einer Einsenkung 33 zur Aufnahme einer Klemmschelle 34 versehen, die die Rastverbindung stabilisiert und gegen eine Verdrehung des Lagerkörpers 21 im Halterungsbock 14 sichert. Zwischen diesen (14, 21) ist im Bereich zwischen dem vorderen Bereich des Lagerkörpers 21 und der Ringwulst 31 ein Ringspalt 35 ausgebildet, in dem der Lagerkörper 21 mit den konzentrisch angeordneten Rillen 32 versehen ist und in dem ein Dichtungs- und zugleich akustisches Entkopplungselement 36 aus einem gummielastischen Material eingespritzt ist. Nach einer Demontage der Klemmschelle 34 kann die Rastverbindung auf einfache Weise gelöst werden, wobei das Entkopplungselement 36 am Lagerkörper 21 verbleibt.

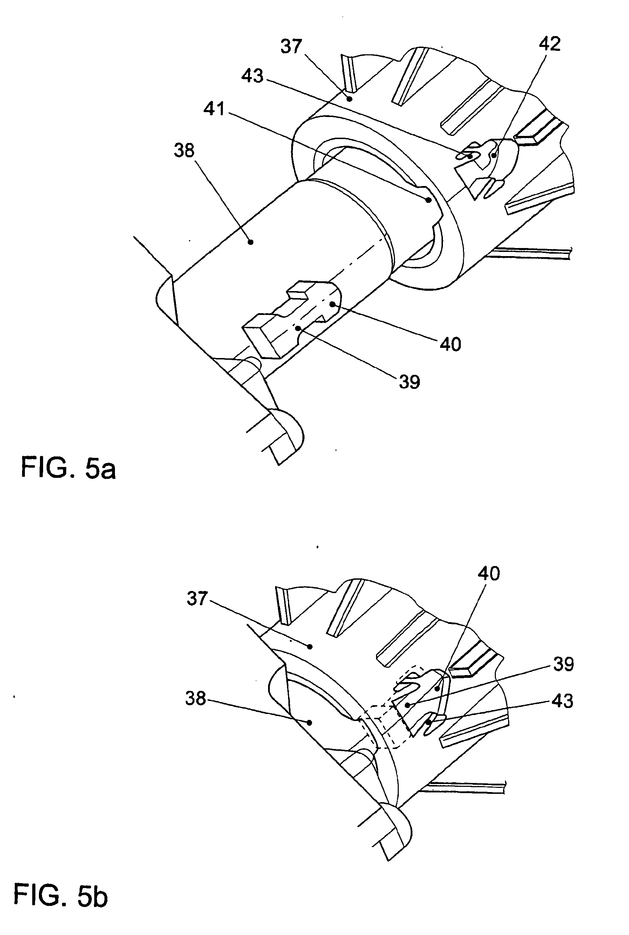

Bei der in den Fig. 5a und b gezeigten Ausführung der Rastverbindung zwischen einem Halterungsbock 37, der fahrzeuginnenseitig am Einsatz 8 ausgebildet ist, und einem Lagerkörper 38, weisen letzterer auf seiner Umfangsfläche ein in axialer Richtung ausgebildetes pfeilförmiges Rastelement 39 mit einem pilzförmigen Rastkopf 40 und der Halterungsbock 37 eine Führungsnut 41 und eine Rastausnehmung 42 für das Rastelement 39 auf. In der Rastausnehmung 42 sind zwei elastisch biegbare Raststege 43 angeformt, die beim Einschieben des Rastelementes 39 auseinandergedrückt werden und die in dessen Rastposition den Rastkopf 40 hintergreifen, was in Fig. 5b dargestellt ist. Zum Lösen der Rastverbindung müssen die beiden Raststege auseinandergedrückt und dabei aus dem Hintergriff gelöst werden, so dass das Rastelement 39 durch die Führungsnut 41 aus der Rastausnehmung 42 gezogen werden kann.

### Bezugszeichenliste

- 1: Heckscheibe
- 2: Heckklappe
- 3: Wischerwelle
- 4: Wischerarm
- 5: Spritzdüse
- 6: Anschlussvorrichtung
- 7: Wischerblatt
- 8: Einsatz
- 9: Ausnehmung
- 10: Karosserieblech
- 11: Wischfeld
- 12: -
- 13: Halterungsplatte
- 14: Halterungsbock
- 15: Deckplatte
- 16: Karosserieaußenblech
- 17: Einsenkung
- 18: Fuge
- 19: Wandungsansatz
- 20: Spalt
- 21: Lagerkörper
- 22: Öffnung
- 23: Rastsegment
- 24: Rasthülse
- 25: Klebstoffraupe
- 26: Rand
- 27: Rand
- 28: Wischermotor
- 29: Getriebe
- 30: Antriebsvorrichtung
- 31: Ringwulst
- 32: Rille
- 33: Einsenkung
- 34: Klemmschelle
- 35: Ringspalt
- 36: Entkopplungselement

- 37: Halterungsbock
- 38: Lagerkörper
- 39: Rastelement
- 40: Rastkopf
- 41: Führungsnut
- 42: Rastausnehmung
- 43: Raststeg

## Patentansprüche

1. Befestigungsanordnung für einen Heckscheibenwischer an einem Fahrzeug, bei der die elektrische Antriebsvorrichtung (30) fahrzeuginnenseitig angeordnet und die den Wischerarm (4) antreibende Wischerwelle (3) mit einem Lagerkörper (21, 38) abgedichtet und akustisch entkoppelt, durch eine Öffnung (22) nach außen geführt ist, **dadurch gekennzeichnet, dass** die Öffnung (22) in einem in das Fahrzeuginnere ragenden Halterungsbock (14, 37) für den Lagerkörper (21 , 38) und die dem Lagerkörper Antriebsvorrichtung (30) angeordnet ist, wobei der Halterungbock (14, 37) einen plattenartigen Ansatz (15) aufweist, der als Einsatz (8) in einer Ausnehmung (9) in dem an die Heckscheibe (1) grenzenden Karosserieblech (10) angeordnet ist.

2. Befestigungsanordnung nach Anspruch 1, **dadurch gekennzeichnet, dass** der Einsatz (8) mit dem Karosserieblech (10) durch eine Klebeverbindung (25) stoffschlüssig verbunden ist.

3. Befestigungsanordnung nach Anspruch 1, **dadurch gekennzeichnet, dass** die Heckscheibe (1) mit dem Ansatz (15) bündig abschließt.

4. Befestigungsanordnung nach Anspruch 1, **dadurch gekennzeichnet, dass** der Lagerkörper (21, 38) mit dem Halterungsbock (14, 37) lösbar verrastet ist.

5. Befestigungsanordnung nach Anspruch 4, **dadurch gekennzeichnet, dass** der fahrzeuginnenseitige Endbereich des Halterungsbockes (21) zu einer aus mehreren achsparallelen Rastsegmenten (23) bestehenden Rasthülse (24) für den Lagerkörper (21) ausgebildet ist, die im Verrastungszustand eine an diesem ausgebildete Ringwulst (31) hintergreift.

6. Befestigungsanordnung nach Anspruch 5, **dadurch gekennzeichnet, dass** die Rastsegmente (23) innenseitig an die Ringwulst (31) angepasst sind und diese im Verrastungszustand formschlüssig umschließen.

7. Befestigungsanordnung nach Anspruch 5, **dadurch gekennzeichnet, dass** auf der Rasthülse (24) eine Klemmschelle (34) angeordnet ist.

8. Befestigungsanordnung nach Anspruch 4, **dadurch gekennzeichnet, dass** der Lagerkörper (38) auf seiner Umfangsfläche ein in axialer Richtung ausgebildetes Rastelement (39) mit einem auf der der Antriebsvorrichtung (30) abgewandten Seite angeformten Rastkopf (40) aufweist, der in eine am Halterungsbock (37) ausgebildete Führungsnut (41) und eine Rastausnehmung (42) eingreift, in der auf das Rastelement (39) zu geneigte Raststege (43) ausgebildet sind, die den Rastkopf (40) hintergreifen.

9. Befestigungsanordnung nach Anspruch 1, **dadurch gekennzeichnet, dass** der Lagerkörper (21, 38) gegenüber dem Halterungsbock (14, 37) durch eine in axialer Richtung erstreckte Dichtungshülse (36) abgedichtet ist.

10. Befestigungsanordnung nach Anspruch 9, **dadurch gekennzeichnet, dass** der Lagerkörper (21) im Anordnungsbereich der Dichtungshülse (36) konzentrische Rillen (32) oder konzentrische Ringnuten aufweist.

## Claims

1. Fastening system for fastening a rear window wiper to a vehicle, in which the electric drive device (30) is arranged on the inside of the vehicle and the wiper shaft (3) which drives the wiper arm (4) and has a bearing body (21, 38) is guided in a sealed and acoustically decoupled manner to the outside through an opening (22), **characterized in that** the opening (22) is arranged in a mounted block (14, 37) which protrudes in the interior of the vehicle and is intended for the bearing body (21, 38) and the drive device (30) which is connected to the bearing body, the mounting block (14, 37) having a plate-like extension (15) which is arranged as an insert (8) in a recess (9) in the bodywork panel (10) bordering the rear window (1).

2. Fastening system according to Claim 1, **characterized in that** the insert (8) is connected to the bodywork panel (10) with a cohesive material joint by means of an adhesive connection (25):

3. Fastening system according to Claim 1, **characterized in that** the rear window (1) ends flush with the extension (15).

4. Fastening system according to Claim 1, **characterized in that** the bearing body (21, 38) is latched releasably to the mounting block (14, 37).

5. Fastening system according to Claim 4, **characterized in that that** end region of the mounting
block (21) which is on the inside of the vehicle is designed to form a latching sleeve (24) for the bearing body (21), the latching sleeve consisting of a plurality of axially parallel latching segments (23) and, in the latching state, engaging behind an annular bead (31) formed on the bearing body.

6. Fastening system according to Claim 5, **characterized in that** the latching segments (23) are matched on the inside to the annular bead (31) and, in the latching state, surround said annular bead in a form-fitting manner.

7. Fastening system according to Claim 5, **characterized in that** a clamping clip (34) is arranged on the latching sleeve (24).

8. Fastening system according to Claim 4, **characterized in that** the circumferential side of the bearing body (38) has a latching element (39) which is formed in the axial direction and has a latching head (40) which is moulded on on the side facing away from the drive device (30) and engages in a guide groove (41) formed on the mounting block (37) and in a latching recess (42), in which latching webs (43) which are inclined towards the latching element (39) and engage behind the latching head (40) are formed.

9. Fastening system according Claim 1, **characterized in that** the bearing body (21, 38) is sealed off from the mounting block (14, 37) by a sealing sleeve (36) extending in the axial direction.

10. Fastening system according to Claim 9, **characterized in that** the bearing body (21) has concentric flutes (32) or concentric annular grooves in the region in which the sealing sleeve (36) is arranged.

## Revendications

1. Système de fixation pour un essuie-glace de vitre arrière d'un véhicule, dans lequel le dispositif d'entraînement électrique (30) est disposé du côté intérieur du véhicule et l'arbre d'essuie-glace (3) entraînant le bras d'essuie-glace (4) est guidé vers l'extérieur à travers une ouverture (22) avec un corps de palier (21, 38), de manière étanchée et désaccouplée acoustiquement, **caractérisé en ce que** l'ouverture (22) est disposée dans un support de fixation (14, 37) saillant à l'intérieur du véhicule pour le corps de palier (21, 38) et le dispositif d'entraînement (30) connecté au corps de palier, le support de fixation (14, 37) présentant un élément rapporté de type plaque (15), qui est disposé sous forme d'insert (8) dans un évidement (9) dans la tôle de la carrosserie (10) adjacente à la vitre arrière (1).

2. Système de fixation selon la revendication 1, **caractérisé en ce que** l'insert (8) est connecté par engagement par liaison de matière à la tôle de la carrosserie (10) par une connexion par collage (25).

3. Système de fixation selon la revendication 1, **caractérisé en ce que** la vitre arrière (1) se termine en affleurement avec l'élément rapporté (15).

4. Système de fixation selon la revendication 1, **caractérisé en ce que** le corps de palier (21, 38) est encliqueté de manière détachable au support de fixation (14, 37).

5. Système de fixation selon la revendication 4, **caractérisé en ce que** la région d'extrémité du côté intérieur du véhicule du support de fixation (21) est réalisée en une douille d'encliquetage (24) pour le corps de palier (21), constituée de plusieurs segments d'encliquetage (23) d'axes parallèles, qui vient en prise par l'arrière dans l'état d'encliquetage avec un bourrelet annulaire (31) réalisé sur celui-ci.

6. Système de fixation selon la revendication 5, **caractérisé en ce que** les segments d'encliquetage (23) sont adaptés du côté intérieur au bourrelet annulaire (31) et entourent celui-ci par engagement par correspondance géométrique dans l'état d'encliquetage.

7. Système de fixation selon la revendication 5, **caractérisé en ce qu'**un collier de serrage (34) est disposé sur la douille d'encliquetage (24).

8. Système de fixation selon la revendication 4, **caractérisé en ce que** le corps de palier (38) présente, sur sa surface périphérique, un élément d'encliquetage (39) réalisé dans la direction axiale, avec une tête d'encliquetage (40) façonnée sur le côté opposé au dispositif d'entraînement (30), laquelle vient en prise dans une rainure de guidage (41) réalisée sur le support de fixation (37) et dans un évidement d'encliquetage (42), dans lequel sont réalisées des nervures d'encliquetage (43) inclinées vers l'élément d'encliquetage (39), lesquelles viennent en prise par l'arrière avec la tête d'encliquetage (40).

9. Système de fixation selon la revendication 1, **caractérisé en ce que** le corps de palier (21, 38) est étanchéifié par rapport au support de fixation (14, 37) par une douille d'étanchéité (36) s'étendant dans la direction axiale.

10. Système de fixation selon la revendication 9, **caractérisé en ce que** le corps de palier (21) présente, dans la région d'agencement de la douille d'étanchéité (36), des gorges concentriques (32) ou des rainures annulaires concentriques.
